# EUROPÄISCHE PATENTSCHRIFT

(11) **EP 3 347 278 B1**
(45) Veröffentlichungstag und Bekanntmachung des Hinweises auf die Patenterteilung: **24.06.2020**
(21) Anmeldenummer: 16760695.3
(22) Anmeldetag: 31.08.2016
(51) Int. Cl.: B65B 35/24, B65G 21/14

(54) **EINLEGER MIT EINEM DREHBAREN PORTIONIERBAND**
FEEDER WITH A ROTATABLE PORTIONING BELT
INSERT COMPRENANT UNE BANDE DE PORTIONNEMENT ROTATIVE

(30) Priorität: 08.09.2015 DE 102015217124
(43) Veröffentlichungstag der Anmeldung: 18.07.2018
(60) Teilanmeldung: 20162111.7
(73) Patentinhaber: GEA Food Solutions Germany GmbH, 35216 Biedenkopf-Wallau (DE)
(72) Erfinder: KUTTER, Tobias, 87700 Memmingen (DE)
(74) Vertreter: Kutzenberger Wolff & Partner
(86) Internationale Anmeldenummer: PCT/EP2016/070479
(87) Internationale Veröffentlichungsnummer: WO 2017/042066

(56) Entgegenhaltungen:
- EP-A1- 0 212 023
- EP-A2- 0 104 142
- US-A1- 2006 131 131

## Beschreibung

Die vorliegende Erfindung betrifft ein Verfahren zur Erzeugung beliebiger Portionen und Formate von Produkten, mit einem Aufreihband, das die Produkte fördert und an einer Übergabekante an ein Portionierband übergibt, mit dem die Produkte als entsprechende Portion und/oder in dem jeweiligen Format vorzugsweise weiter gefördert werden, wobei
- die Lage der Übergabekante relativ zum Portionierband mindestens in einer Richtung verändert wird und/oder
- die Lage des Portionierbandes mindestens in einer Richtung relativ zur Übergabekante bewegt wird und
- die erzeugten Formate in ein entsprechendes Format an Verpackungsmulden, die entlang einer Verpackungsmaschine transportiert werden, eingelegt werden.

Des Weiteren betrifft die vorliegende Erfindung eine entsprechende Vorrichtung.

Positioniersysteme für das Positionieren von Produkten, beispielsweise Lebensmitteln, sonstigen Gütern und dergleichen sind beispielsweise aus der US2006/131131 bekannt. Die Produkte werden dabei von einem Förderband beispielsweise an eine Verpackungslinie übergeben. Da diese Verpackungsanlagen heutzutage mehrreihig ausgeführt sind, muss ein ankommender Produktstrom zunächst in die Anzahl von Produktströmen zerteilt werden, die der Anzahl von Produktreihen der Verpackungslinie entspricht. Eine Verteilung eines einstreifigen Produktstromes auf eine mehrreihige Verpackungslinie ist derzeit dann möglich, wenn die gleiche Anzahl von Förderbändern mit ankommenden Produkten parallel über der jeweiligen Reihe der Verpackungslinie angeordnet ist, durch die die einzelnen Produkte oder Produktstapel dann in die jeweilige Reihe der Verpackungslinie eingelegt beziehungsweise von dem Förderband abgeworfen werden. Die Verfahren gemäß dem Stand der Technik haben jedoch oftmals den Nachteil, dass die Produkte und/oder Portionen für das Format der Verpackungsmaschine falsch ausgerichtet sind.

Es stellt sich deshalb die Aufgabe ein Verfahren zur Erzeugung beliebiger Portionen und Formate zur Verfügung zu stellen, die die Nachteile des Standes der Technik nicht aufweist.

Gelöst wird die Aufgabe mit einem Verfahren zur Erzeugung beliebiger Portionen und Formate von Produkten, mit einem Aufreihband, das die Produkte fördert und an einer Übergabekante an ein Portionierband übergibt, auf dem die Produkte als entsprechende Portion und/oder in dem jeweiligen Format vorzugsweise weiter gefördert werden, wobei
- die Lage der Übergabekante relativ zum Portionierband mindestens in einer Richtung verändert wird und/oder
- die Lage des Portionierbandes mindestens in einer Richtung relativ zur Übergabekante bewegt wird und
- die erzeugten Formate in ein entsprechendes Format an Verpackungsmulden, die entlang einer Verpackungsmaschine transportiert werden, eingelegt werden,
wobei das Portionsband vor dem Einlegen der Portionen um eine vertikale Drehachse gedreht wird.

Eine Portion im Sinne der Erfindung ist jede Anordnung, in der Produkte, insbesondere Lebensmittel, in einem bestimmten Portionsbild arrangiert werden. Beispielhaft jedoch nicht einschränkend für mögliche Portionsbilder seien hier der Stapel, der Schindel in Längs- und in Querrichtung jeweils mit und ohne Überlappung, Zick-Zack-Muster sowie die terrassenförmige Reihe genannt.

Ein Format im Sinne der Erfindung ist die Anordnung, die die einzelnen Portionen zueinander einnehmen. In der Regel richtet sich das Format der Portionen nach der Anordnung der Verpackungsmulden einer nachfolgenden Verpackungsmaschine, in die die Portionen abgelegt werden und/oder dem Takt, mit dem die Verpackungsmulden weitertransportiert werden. Vorzugsweise werden die Produkte in parallelen Produktreihen abgelegt.

Erfindungsgemäß wird ein Verfahren zur Erzeugung beliebiger Portionen und Formate zur Verfügung gestellt, die aus einem Aufreihband und einem Portionierband besteht. Mit dem Aufreihband werden die Produkte oder Portionen gefördert und an einer Übergabekante an das Portionierband übergeben. Auf dem Portionierband werden die jeweils gewünschten Portionen bzw. Formate abgelegt. Vorzugsweise ist das Aufreihband ein Endlosband, besonders bevorzugt ein sogenanntes Shuttelband, bei dem zur Übergabe der Produkte und/oder Portionen die Vorderkante schnell zurückgezogen wird, damit die Produkte an der Übergabekante nicht kippen. Vorzugsweise kann die Lage der Übergabekante des Aufreihbandes relativ zu dem Portionierband verändert werden. Die Veränderung der Lage der Übergabekante des Aufreihbandes kann dadurch erzeugt werden, dass das gesamte Aufreihband relativ zu dem Portionierband verschieblich gelagert ist und/oder dass die Länge des Aufreihbandes beispielsweise durch eine Ausführung als Rückzugs- oder Shuttleband veränderbar ist.

Als Portionierband eignet sich jede dem Fachmann geläufige Vorrichtung auf dem die Produkte in vorbestimmten Portionen und/oder in einem gewissen Formate abgelegt und weitertransportiert werden können. Das Portionierband kann dann die vom Aufreihband ankommenden Produkte in dem gewünschten Portionsbild zu einer Verpackungsmaschine weiterfördern. Vorzugsweise ist das Portionierband ein Endlosband, das vorzugsweise in einem Maschinenrahmen angeordnet ist. Die Veränderung der Lage des Portionierbandes kann dadurch erzeugt werden, dass der gesamte Maschinenrahmen relativ zu der Übergabekante und/oder dass das Portionierband relativ zu dem Maschinenrahmen bewegt wird. Vorzugsweise ist das Portionierband als Shuttleband ausgeführt.

Weiterhin erfindungsgemäß wird das Portionierband um eine Drehachse und/oder entlang einer Kulisse und/oder mit einer Hebelkinematik, im Folgenden als Drehpunkt bezeichnet, gedreht und/oder geschwenkt. Diese Drehung/Schwenkung erfolgt vorzugsweise nachdem ein Format fertig auf dem Portionierband abgelegt worden ist und bevor dieses in die Verpackungsmulden eingelegt wird. Das erfindungsgemäße Verfahren hat insbesondere den Vorteil, dass Formate vor dem Einlegen in ein Format von Verpackungsmulden gedreht werden können. Dies erhöht die Flexibilität einer entsprechenden Anlage. Vorzugsweise ist das Portionierband, insbesondere die Übergabekante, relativ zu dem Drehpunkt beweglich vorgesehen.

In einer bevorzugten Ausführungsform der vorliegenden Erfindung ist die Lage der Übergabekante des Aufreihbandes und/oder des Portionierbandes in und gegen die Förderrichtung des Aufreihbandes veränderbar

In einer weiteren bevorzugten Ausführungsform der vorliegenden Erfindung ist das Portionierband mindestens in zwei vorzugsweise senkrecht aufeinander stehenden Richtungen beweglich ausgebildet, insbesondere relativ zu dem Drehpunkt des Portionierbandes.

Vorzugsweise ist die Übergabekante an dem Aufreihband und/oder dem Portionierband in einer Führung verschieblich gelagert, wobei die Verschiebung vorzugsweise durch einen Servomotor erfolgt. In diesem Fall muss bei dem Aufreihband und/oder Portionierband eine Kompensation der Bandlänge vorgesehen werden. Diese Ausführungsform der vorliegenden Erfindung hat den Vorteil, dass die genaue Position des Endes des Aufreihbandes/Portionierbandes jederzeit elektronisch ermittelbar ist. Sie erlaubt eine stufenlose Positionierung der abzulegenden Produkte/Portionen auf dem Positionierband und/oder in der jeweiligen Verpackungsmulde. Eine verschieblich gelagerte Übergabekante hat weiterhin den Vorteil, dass die Produkte von dem Aufreihband auf das Portionierband und/oder von dem Portionierband in die Verpackungsmulde durch einen schnellen Rückhub, vorzugsweise bei konstanter Transportgeschwindigkeit des Aufreihbandes, übergeben werden können. Diese Ausführungsform der vorliegenden Erfindung bewirkt eine Reduzierung des Kippeffektes der Produkte während deren parabelförmiger Flugbahn.

Weiterhin erfindungsgemäß ist das Portionierband auch ein Einlegeband. In diesem Fall können auf dem Portionierband ein oder mehrere Formate erzeugt werden, beispielsweise zu einer Verpackungsmaschine transportiert und dann mit dem Portionierband in Verpackungen eingelegt. Da das Portionierband auch als Einlegeband genutzt wird, ist es vorteilhaft wenn dessen eines Ende verschieblich gelagert ist, so dass das Portionierband verlängert und verkürzt werden kann. Besonders bevorzugt ist das Portionierband als sogenanntes Rückzugs- oder Shuttleband ausgeführt, so dass die Produkte mit einem schnellen Rückhub des Portionierbandes in die Verpackungsmulden eingelegt werden können. Ganz besonders bevorzugt erfolgt die Verschiebung des besagten Endes durch einen Servomotor, wobei das Band bei dem Rückzug vorzugsweise still steht. Diese Ausführungsform der vorliegenden Erfindung hat den Vorteil, dass dessen Positionierung sehr exakt erfolgt und dass die genaue Position des Endes des Portionierbandes jederzeit elektronisch ermittelbar ist.

Weiterhin bevorzugt erfolgt der Antrieb des Aufreihbandes und/oder des Portionierbandes ebenfalls jeweils durch einen Servomotor, so dass die Bewegungen der Bänder sehr genau steuerbar sind und durch einen Geber an eine zentrale Steuereinheit übermittelt werden können.

Vorzugsweise wird das Portionierband zum Einlegen der Portion um 90° gedreht. Vorzugsweise sind das Aufreihband und das Portionierband zum Erstellen der Portion und/oder des Formats parallel ausgerichtet sind.

Ein weiterer Gegenstand der vorliegenden Erfindung ist eine Vorrichtung zur Erzeugung beliebiger Portionen und/oder Formate von Produkten, mit einem Aufreihband, das die Produkte fördert und an einer Übergabekante an ein Portionierband übergibt, mit dem die Produkte als entsprechende Portionen und/oder in dem jeweiligen Format weiter gefördert werden, wobei
- die Lage der Übergabekante relativ zum Portionierband mindestens in einer Richtung veränderbar ist und/oder
- die Lage des Portionierbandes mindestens in einer Richtung relativ zur Übergabekante beweglich ausgebildet ist und
wobei das Portionierband um eine vertikale Drehachse drehbar vorgesehen ist.

Die zu diesem Gegenstand der vorliegenden Erfindung gemachten Ausführungen gelten für das erfindungsgemäße Verfahren gleichermaßen und umgekehrt.

Vorzugsweise werden das Aufreihband und/oder das Portionierband so bewegt, dass mit den Produkten beliebige Portionen und/oder Formate erzeugbar sind,

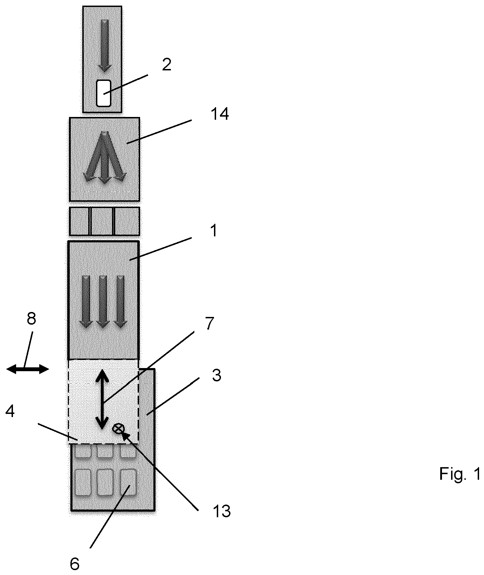

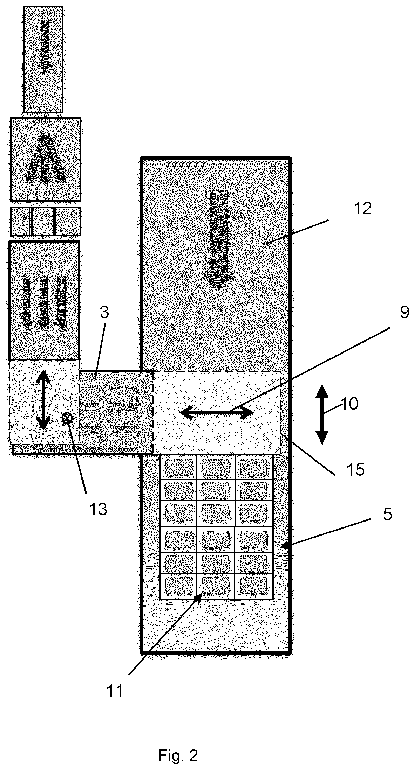

Im Folgenden wird die Erfindung anhand der Figuren 1 und 2 erläutert. Diese Erläuterungen sind lediglich beispielhaft und schränken den allgemeinen Erfindungsgedanken nicht ein. Die Erläuterungen gelten gleichsam für die erfindungsgemäße Vorrichtung, das erfindungsgemäße System sowie das erfindungsgemäße Verfahren.

Figuren 1 und 2 zeigen eine Ausgestaltungsform der erfindungsgemäßen Vorrichtung

Figuren 1 und 2 zeigen eine Ausgestaltungsform der erfindungsgemäßen Vorrichtung mit einem Aufreihband 1 und einem Portionierband 3. Der ankommende Produktstrom 2 (nur ein Produkt dargestellt) kann mit einem Vorverteiler 14 auf mehrere Reihen aufgeteilt werden. Diese Produktreihen werden in dem vorliegenden Fall auf dem Aufreihband zu einem Format konfiguriert. Der Fachmann versteht, dass der Vorverteiler nur optional vorhanden ist. Das Format kann auch durch die Pfeile 7, 8 dargestellte Bewegung des Aufreihbandes erzeugt werden. Die Übergabe des Formates an das Portionierband 3 erfolgt durch einen schnellen Rückzug der Übergabekante 4 des Aufreihbandes. Sobald eine gewünschte Anzahl an Portionen auf dem Portionierband abgelegt worden ist, wird dieses um die Drehachse 13 gedreht und mindestens ein Format an Portionen wird in ein entsprechendes Format 5 an Verpackungsmulden 11, die bei einem Takt der Verpackungsmaschine weitertransportiert werden, eingelegt. Dies erfolgt durch einen schnellen Rückzug der Vorderkante des Portionierbandes. In dem vorliegenden Fall werden bei jedem Takt 3 x 3 Portionen in Verpackungsmulden eingelegt. Die durch die Pfeile 9, 10 dargestellte Bewegung des Portionierbandes, insbesondere relativ zu der Drehachse 13 kann zur Ausrichtung des Formates auf dem Portionierband und oder zur Ausrichtung des Portionierbandes relativ zu dem Aufreihband und/oder zu den Verpackungsmulden eingesetzt werden.

Es ist deutlich zu erkennen, dass das Format und die Portionen vor der Drehung des Portionierbandes (Fig. 1) noch falsch ausgerichtet sind. Erst durch die Drehung des Portionierbandes sind das Format an Portionen und das Format an Verpackungsmulden gleich ausgerichtet.

### Bezugszeichenliste:

- 1: Aufreihband
- 2: Produkt
- 3: Portionierband
- 4: Übergabekante
- 5: Format
- 6: Portion
- 7: Bewegungsrichtung
- 8: Bewegungsrichtung
- 9: Bewegungsrichtung
- 10: Bewegungsrichtung
- 11: Verpackungsmulde
- 12: Verpackungsmaschine
- 13: Drehpunkt
- 14: Verteiler

## Patentansprüche

1. Verfahren zur Erzeugung beliebiger Portionen (6) und Formate (5) von Produkten (2), mit einem Aufreihband (1), das die Produkte (2) fördert und an einer Übergabekante (4) an ein Portionierband (3) übergibt, mit dem die Produkte als entsprechende Portion (6) und/oder in dem jeweiligen Format (5) weiter gefördert werden, wobei
- die Lage der Übergabekante (4) relativ zum Portionierband (3) mindestens in einer Richtung (7, 8) verändert wird und/oder
- die Lage des Portionierbandes (3) mindestens in einer Richtung (9, 10) relativ zur Übergabekante bewegt wird und
- und die erzeugten Formate (5) in ein entsprechendes Format an Verpackungsmulden (11), die entlang einer Verpackungsmaschine (12) transportiert werden, eingelegt werden,
**dadurch gekennzeichnet, dass** das Portionierband (3) vor dem Einlegen der Portionen um eine vertikale Drehachse (13) gedreht wird.

2. Verfahren nach Anspruch 1, **dadurch gekennzeichnet, dass** das Portionierband (3) um 90° gedreht wird.

3. Verfahren nach Anspruch 1 oder 2, **dadurch gekennzeichnet, dass** das Aufreihband (1) und das Portionierband (3) als Rückzugsband ausgeführt werden.

4. Verfahren nach einem der voranstehenden Ansprüche, **dadurch gekennzeichnet, dass** das Aufreihband (1) und das Portionierband (3) zum Erstellen der Portion und/oder des Formats parallel zueinander ausgerichtet werden.

5. Verfahren nach einem der voranstehenden Ansprüche, **dadurch gekennzeichnet, dass** das Portionierband (3) zumindest teilweise relativ zu dem Drehpunkt (13) bewegt wird.

6. Verfahren nach Anspruch 5, **dadurch gekennzeichnet, dass** das sich das Portionierband beim Einlegen der Portionen in die Verpackungsmulden bewegt.

7. Vorrichtung zur Erzeugung beliebiger Portionen (6) und Formate (5) von Produkten (2), mit einem Aufreihband (1), das die Produkte (2) fördert und an einer Übergabekante (4) an ein Portionierband (3) übergibt, mit dem die Produkte als entsprechende Portionen (6) und/oder in dem jeweiligen Format (5) weiter gefördert werden, wobei
- die Lage der Übergabekante (4) relativ zum Portionierband (3) mindestens in einer Richtung (7, 8) veränderbar ist und/oder
- die Lage des Portionierbandes (3) mindestens in einer Richtung (9, 10) relativ zur Übergabekante beweglich ausgebildet ist und
**dadurch gekennzeichnet, dass** das Portionierband (3) um eine vertikale Drehachse (13) drehbar und/oder schwenkbar vorgesehen ist.

8. Vorrichtung nach Anspruch 7, **dadurch gekennzeichnet, dass** Portionierband (3) zumindest teilweise relativ zu dem Drehpunkt (13) entlang mindestens einer Bewegungsrichtung (9, 10) beweglich vorgesehen ist.

## Claims

1. Method for producing any portions (6) and formats (5) of products (2), with a lining-up belt (1) which conveys the products (2) and at a transfer edge (4) transfers them to a positioning belt (3) by which the products are conveyed further as corresponding portion (6) and/or the format (5) concerned, wherein
- the position of the transfer edge (4) is moved relative to the portioning belt (3) at least in one direction (7, 8), and/or
- the position of the portioning belt (3) is moved relative to the transfer edge at least in one direction (9, 10), and
- and the produced formats (5) are inserted into a corresponding format at packaging trays (11) which are transported along a packaging machine (12),
**characterized in that** the portioning belt (3) is rotated about a vertical axis of rotation (13) before the portions are inserted.

2. Method according to Claim 1, **characterized in that** the portioning belt (3) is rotated by 90°.

3. Method according to Claim 1 or 2, **characterized in that** the lining-up belt (1) and the portioning belt (3) are designed in the form of a return motion belt.

4. Method according to one of the preceding claims, **characterized in that** the lining-up belt (1) and the portioning belt (3) are aligned parallel to each other in order to produce the portion and/or the format.

5. Method according to one of the preceding claims, **characterized in that** the portioning belt (3) is at least partially moved relative to the point of rotation (13).

6. Method according to Claim 5, **characterized in that** the the portioning belt is moved when the portions are inserted into the packaging trays.

7. Device for producing any portions (6) and formats (5) of products (2), with a lining-up belt (1) which conveys the products (2) and at a transfer edge (4) transfers them to a positioning belt (3) by which the products are conveyed further as corresponding portions (6) and/or the format (5) concerned,
wherein
- the position of the transfer edge (4) is moved relative to the portioning belt (3) at least in one direction (7, 8), and/or
- the position of the portioning belt (3) is moved relative to the transfer edge at least in one direction (9, 10), and
**characterized in that** the portioning belt (3) is provided so as to be rotatable and/or pivotable about a vertical axis of rotation (13).

8. Device according to Claim 7, **characterized in that** the portioning belt (3) is provided so as to be at least partially movable relative to the point of rotation (13) along at least one direction of movement (9, 10).

## Revendications

1. Procédé permettant de constituer des portions (6) et formats (5) quelconques de produits (2), comprenant une bande d'alignement (1) qui transporte les produits (2) et les transfère au niveau d'un bord de transfert (4) à une bande de portionnement (3) par laquelle les produits sont transportés plus loin sous la forme d'une portion (6) correspondante et/ou dans le format (5) respectif, dans lequel
- la situation du bord de transfert (4) par rapport à la bande de portionnement (3) est modifiée au moins dans une direction (7, 8), et/ou
- la situation de la bande de portionnement (3) est déplacée au moins dans une direction (9, 10) par rapport au bord de transfert, et
- et les formats constitués (5) sont insérés dans un format correspondant de barquettes de conditionnement (11) qui sont transportées le long d'une machine de conditionnement (12),
**caractérisé en ce que** la bande de portionnement (3) est amenée à tourner autour d'un axe de rotation vertical (13) avant l'insertion des portions.

2. Procédé selon la revendication 1, **caractérisé en ce que** la bande de portionnement (3) est amenée à tourner sur 90°.

3. Procédé selon la revendication 1 ou 2, **caractérisé en ce que** la bande d'alignement (1) et la bande de portionnement (3) sont réalisées sous forme de bande de retrait.

4. Procédé selon l'une quelconque des revendications précédentes, **caractérisé en ce que** la bande d'alignement (1) et la bande de portionnement (3) sont orientées en parallèle l'une à l'autre pour créer la portion et/ou le format.

5. Procédé selon l'une quelconque des revendications précédentes, **caractérisé en ce que** la bande de portionnement (3) est déplacée au moins en partie par rapport au centre de rotation (13).

6. Procédé selon la revendication 5, **caractérisé en ce que** la la bande de portionnement se déplace lorsque les portions sont insérées dans les barquettes de conditionnement.

7. Dispositif permettant de constituer des portions (6) et formats (5) quelconques de produits (2), comprenant une bande d'alignement (1) qui transporte les produits (2) et les transfère au niveau d'un bord de transfert (4) à une bande de portionnement (3) par laquelle les produits sont transportés plus loin sous la forme de portions (6) correspondantes et/ou dans le format (5) respectif, dans lequel
- la situation du bord de transfert (4) par rapport à la bande de portionnement (3) est modifiée au moins dans une direction (7, 8), et/ou
- la situation de la bande de portionnement (3) est réalisée pour être mobile au moins dans une direction (9, 10) par rapport au bord de transfert, et
**caractérisé en ce que** la bande de portionnement (3) est prévue de façon à pouvoir tourner et/ou pivoter autour d'un axe de rotation vertical (13).

8. Dispositif selon la revendication 7, **caractérisé en ce que** la bande de portionnement (3) est prévue pour être mobile au moins en partie par rapport au centre de rotation (13) le long d'au moins une direction de mouvement (9, 10).
